# EUROPEAN PATENT APPLICATION

(11) **EP 0 624 973 A2**
(43) Date of publication of application: **17.11.1994**
(21) Application number: 94107245.6
(22) Date of filing: 09.05.1994
(51) Int. Cl.: H04N 3/15

(54) **Image sensor**

(30) Priority: 10.05.1993 JP 132955/93
(71) Applicant: Nippon Steel Corporation, Chiyoda-ku Tokyo 100 (JP)
(72) Inventor: Kitamura, Koichi, Chiyoda-ku, Tokyo (JP); Nagatake, Yoichi, Chiyoda-ku, Tokyo (JP)
(74) Representative: VOSSIUS & PARTNER

(57) **Abstract**

In an image sensor, a plurality of sensors (14) are divided into a plurality of small blocks each including as many sensors (14) as the channels (C₁ to C₁₆) of the output circuit (30). The small blocks are divided into a plurality of large blocks (DB₁ to DB₁₁₀) each having the same number of small blocks. A selector (18, 20) selects a particular small block to be driven in a given large block. A drive circuit (40₁ to 40₁₁) sends out to each of the large blocks a signal for driving the sensors (14) and producing image information.

## Description

The present invention relates to an image sensor used as a device for reading an original in a small-sized facsimile or a copying machine.

An image sensor of contact type, which is capable of reading the original without a reduced-size optic system, can have a shorter optic path length and therefore can reduce the system size. Such an image sensor, therefore, has recently been widely used as an image reader for a small-sized facsimile, a hand-held scanner or a bar-code reader.

A common image sensor comprises a plurality of sensors which are arranged linearly along the direction of main scanning. Each sensor comprises a photodiode for subjecting a light signal from the original to photoelectric conversion and a blocking diode for taking out charges from the photodiode which are inversely connected in front-to-front or in back-to-back. Further, these sensors are divided into a plurality of blocks each having the same number of sensors as channels (say, 16) of an output circuit and are connected in matrix. The simultaneous activation of the sets of the photodiode and the blocking diode in one block is performed sequentially for each block thereby to read the one-line image information along the direction of main scanning.

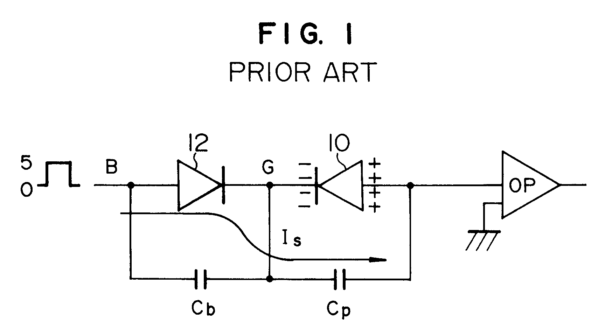

Fig. 1 is a diagram showing an equivalent circuit of a sensor including a photodiode and a blocking diode. A photodiode 10 and a blocking diode 12 are made of amorphous silicon (a-Si), for example. In the equivalent circuit of Fig. 1, the character Cb designates a junction capacitance of the blocking diode 12, and Cp the junction capacitance of the photodiode 10.

In charge storage mode, the potential at point G is initially set to approximately 5 volts. When light enters the photodiode 10 from the original, charges are generated by photoelectric conversion. Positive charges are stored in the anode of the photodiode 10 and negative charges in the cathode thereof in accordance with the amount of light reflected from the original, so that the potential at point G gradually decreases. In subsequent read mode, when a positive drive pulse of 5 volts is applied to the anode (point B) of the blocking diode 12, the blocking diode 12 turns on and the charges stored in the photodiode 10 are delivered as a light current Is. This light current Is flows only during the period when the 5-volt drive pulse is applied to the anode of the blocking diode 12. This light current Is is supplied to the inverse input terminal of and amplified by an operational amplifier OP, and then is delivered as an image signal representing one pixel.

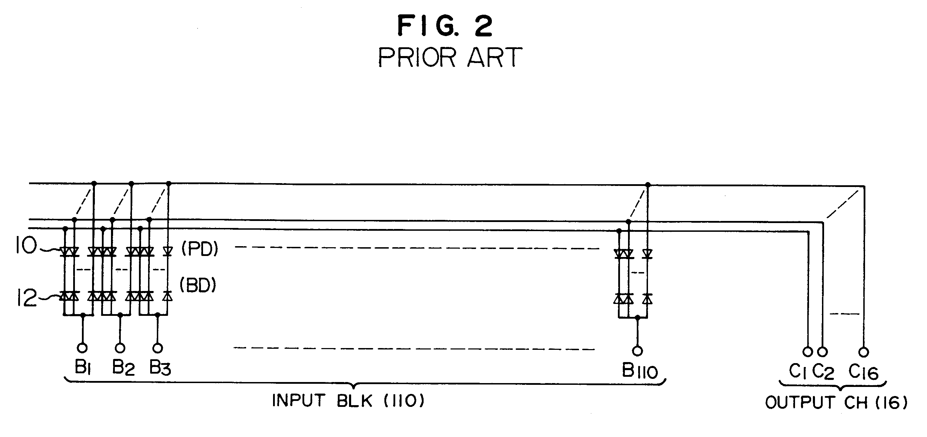

A circuit of an example of a conventional image sensor is shown in Fig. 2. In this image sensor, 1760 sets of the photodiode (PD) and the blocking diode (BD) shown in Fig. 1 are arranged along the direction of main scanning. This image sensor is for reading the original of A4 size. Also, the photodiode-blocking diode sets are separated into a total of 110 blocks of 16. Actually, 1728 sets of photodiode and blocking diode are used and are separated into corresponding 108 blocks (16 × 108 = 1728) for reading the original. In addition, two dummy blocks are provided to make a total of 110 blocks. The output circuit has 16 channels C₁ to C₁₆, and each channel is wired in matrix by being connected to the anode of the corresponding photodiode of each block.

In the image sensor shown in Fig. 2, each block has a drive circuit (not shown) including a drive IC. When a drive pulse of +5 volts is applied from the drive IC to the input B1 of the first block, for example, all the 16 blocking diodes contained in the particular block are turned on at the same time and the charges stored in the corresponding 16 photodiodes are produced as light currents from the 16 output channels C₁ to C₁₆. A similar operation is performed sequentially for the first to 110th blocks thereby to produce a line of image signal along the direction of main scanning.

The ICs (not shown) provided on the output side are for complicated signal processing such as integration of analog signals, and generally cost considerably. The drive ICs on the input side, in contrast, have the sole purpose of generating pulses and generally low in cost. If the cost of the image sensor as a whole is to be reduced, therefore, the number of channels of the output circuit is preferably maintained at about 16 with an increased number of blocks (for example, 110 for the image sensor shown in Fig. 2). With the increase in blocks, however, the number of the required drive ICs increases accordingly, and the bonding work increases with respect to the number of the drive ICs, thereby reducing the efficiency of assembly of image sensors. Further, a higher packaging cost of the drive ICs poses a problem.

The present invention has been developed in view of the above-mentioned situations, and the object thereof is to provide an image sensor having a reduced number of drive ICs of the input circuit with the same number of channels of the output circuit as in the prior art, thereby improving the efficiency of the bonding work for assembly of image sensors.

In order to solve the above-mentioned problem, according to one aspect of the present invention, there is provided an image sensor comprising a plurality of sensors each including a photoelectric converter and a switching device and an output circuit having a plurality of channels for producing image information from each sensor, wherein the sensors are separated into a plurality of small blocks having the same number of sensors as the channels, the outputs of the photoelectric converters are connected in matrix with each small block as a unit, and the sensors in each small block are driven at the same time to produce parallel signals thereby to read image information stored in each of the sensors, the small blocks being divided into a plurality of large blocks each having the same number of small blocks, the image sensor further comprising means for selecting which small block is to be drived in each of the large blocks, each of the large blocks including drive means for sending out a signal for producing image information by driving the sensors.

According to another aspect of the invention, the selector means for each of the small blocks preferably includes a circuit having a pull-up resistor and at least two semiconductor devices.

The selector means preferably includes a circuit having two resistors for each small block.

According to still another aspect of the invention, the selector means for each of the small blocks preferably includes a circuit having two resistors of the same value.

According to a further aspect of the invention, in the above-mentioned selector means including a circuit having two resistors of the same value, the output of the photoelectric converter is preferably maintained at a voltage one half of the drive voltage of the switching device.

An image sensor according to the present invention, though requiring selector means unlike in the prior art, can remarkably reduce the number of drive means since such drive means can be provided for each large block instead of for each small block.

An image sensor according to the invention, the selector means is configured to include a circuit having a pull-up resistor and at least two semiconductor devices, i.e. a simple logic circuit. As a result, a specific small block can be selected among the large blocks by the circuit operation.

Further, the selector means may be constructed to include a circuit having two resistors, thereby simplifying the configuration of the selector means even more. In this configuration, the two resistors preferably have the same value. In such a case, by maintaining the output of the photoelectric converter at a voltage one half of the drive voltage of the switching device, the faulty operation of the selector means can be prevented, thereby realizing an accurate operation.

Fig. 1 is a diagram showing an equivalent circuit of a sensor including a photodiode and a blocking diode.

Fig. 2 is a circuit diagram showing an example of a conventional image sensor.

Fig. 3 is a circuit diagram showing an image sensor according to a first embodiment of the present invention.

Fig. 4 is a diagram showing a selector circuit of the image sensor in Fig. 3 configured of two diodes and a resistor.

Fig. 5 is a truth table representing the operation of the selector circuit shown in Fig. 4.

Fig. 6 is a timing chart showing the operation of the image sensor in Fig. 3.

Fig. 7 is a circuit diagram showing an image sensor according to a second embodiment of the invention.

Fig. 8 is a diagram showing the selector circuit of the image sensor in Fig. 7 including two resistors having the same resistance value.

Fig. 9 is a truth table representing the operation of the selector circuit shown in Fig. 8.

Fig. 10 is a table showing the relationship between the potentials at the terminals or points of the image sensor shown in Fig. 7.

Fig. 11 is a timing chart representing the operation of the image sensor in Fig. 7 as plotted based on part of the relationship shown in Fig. 10.

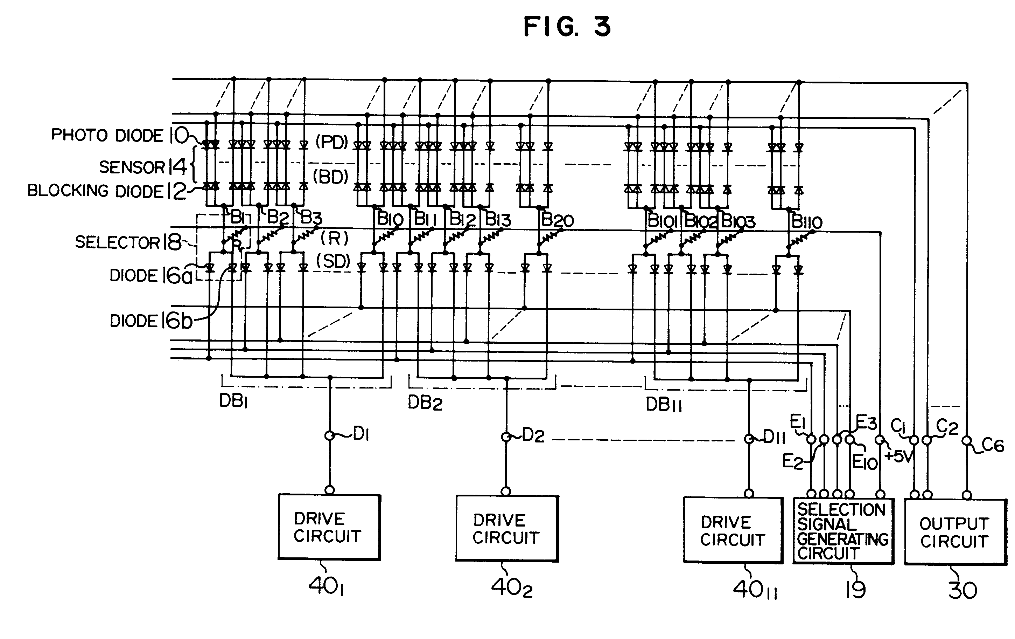

In an image sensor according to a first embodiment of the invention, as shown in Fig. 3, a sensor 14 includes a photodiode 10 and a blocking diode 12 connected in front-to-front. The image sensor according to this embodiment comprises 1760 sensors 14 arranged in linear fashion. Actually, however, the sensors 14 are formed integrally along the longitudinal (main scanning) direction on the substratum of the image sensor. The 1760 sensors 14 are divided into 110 small blocks (B₁ to B₁₁₀) of 16. Each small block includes a selector circuit 18 having two switching diodes 16a, 16b and a resistor R. The terminals (channels) C₁ to C₁₆ connected to an output circuit 30 are connected to the anodes of the photodiodes 10 corresponding to the respective small blocks. The small blocks are divided into 11 large blocks DB₁ to DB₁₁ each having ten small blocks. Each large block thus includes ten small blocks, and ten selector circuits 18 are provided corresponding to the ten small blocks respectively. The input terminals E₁ to E₁₀ connected to a selection signal generating circuit 19 are connected to the cathodes of the diodes 16a of the selector circuits 18. The cathodes of the other diodes 16b of the selector circuit 18 are connected to the input terminals D₁ to D₁₁ of the corresponding large blocks respectively. The selector circuits 18 include resistors R each having one end thereof connected to a 5-volt power line in the selection signal generating circuit 19, and the other end connected to the anodes of the diodes 16a, 16b of the selector circuit 18 and to the anodes of 16 blocking diodes. The input terminals D₁ to D₁₁ of the large blocks are connected to corresponding drive circuits (drive means) 40₁ to 40₁₁ respectively. Each selector circuit 18 and the selection signal generating circuit 19 for supplying an operating signal to the selector circuit 18 function as a selector means for selecting a small block to be driven in a given large block.

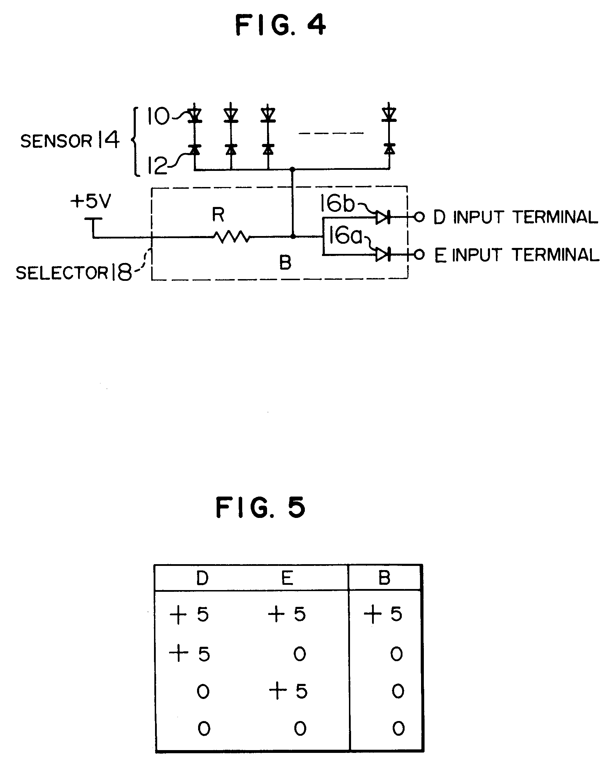

Now, the operation of the selector circuit 18 will be explained with reference to Fig. 4. In Fig. 4, the one end of the resistor R is connected to the +5-volt constant-voltage source in the selection signal generating circuit 19, and the other end of the resistor R is connected to the anodes of the two diodes 16a, 16b. The junction point B between these anodes and the resistor R is connected to the anodes of the 16 blocking diodes 12 in the same small block. The cathode of the diode 16a is connected to the input terminal E connected to the selection signal generating circuit 19, and the cathode of the diode 16b to the input terminal D of the large block. The table of Fig. 5 shows how the potential at the junction point B changes depending on the voltage applied to the two input terminals D, E shown in Fig. 4. As seen from the table, the selector circuit 18 operates as an AND circuit. The charges stored in the photodiode 10 are read out (in read mode) when a +5-V voltage is applied to the anode of the blocking diode 12. As a result, the charges in the photodiode 12 are read out only when the voltages applied to the two input terminals D, E both reach 5 volts, but not in any other cases.

Provision of the selector circuit 18 shown in Fig. 4 for each of the small blocks would appear to complicate the process for fabricating the image sensor. The image sensor shown in Fig. 3 (except for the drive circuits 40₁ to 40₁₁, the selection signal generating circuit 19 and the output circuit 30), however, is actually fabricated by first forming mask patterns and then, using the mask patterns, by repeating the laminating and etching steps. The resistor R and the diodes 16a, 16b making up the selector circuit 18 are basically fabricated through the same process as the photodiodes 10 and the blocking diodes 12. Once the mask patterns providing the basic item has been fabricated, no special process is required for incorporating the selector circuit 18. Thus the selector circuit 18 can be fabricated with the same number of steps as in the prior art.

Further, as compared with the conventional image sensors, the image sensor according to the invention has added thereto not many component parts. Therefore, the extraneous space requirement for the image sensor substratum is small and the whole size of the image sensor remains unchanged. Also, the number of ICs required on the output side is the same 16 as in the prior art, while the ICs needed for the input side are a total of 21 in number including 11 for the drive circuit and 10 for the selection signal generating circuit 19. The only other component required is the constant-voltage source in the selection signal generating circuit 19. For this reason, unlike in the prior art requiring 110 driving ICs, the number of ICs required in the invention is drastically reduced, and the resulting remarkable reduction in the number of bondings considerably decreases the packaging cost.

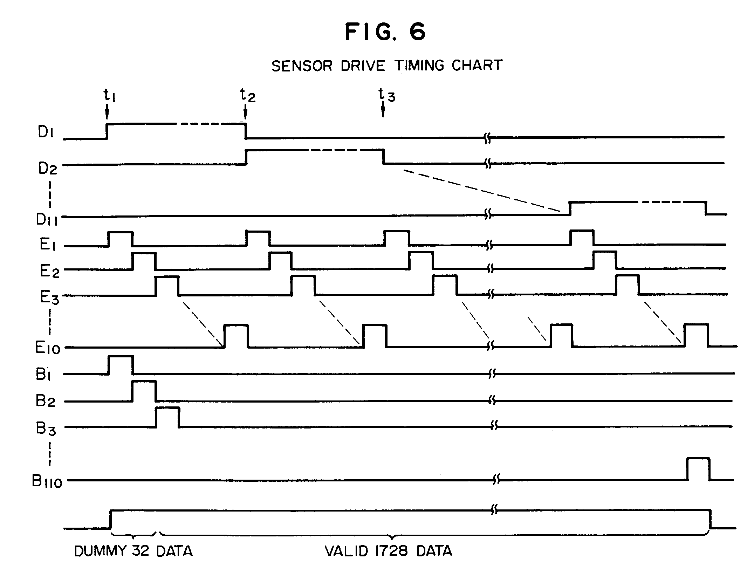

Now, explanation will be made about the operation of the image sensor shown in Fig. 3 with reference to Fig. 6. Symbols on the left side of the diagram designate the input terminals or points in the circuit diagram of Fig. 3. At time t₁, the drive circuit 40₁ to the extreme left of Fig. 3 applies a high-level (+5 V) voltage to the input terminal D₁ of the large block DB₁. As a result, all the sensors 14 in the large block DB₁ are readied for activation. Then, high-level (+5 V) voltages are sequentially and separately applied to the ten input terminals E₁ to E₁₀ through the selection signal generating circuit 19 during a predetermined length of time. When the application of the high-level voltage to the input terminal E₁₀ ceases at time t₂, the high-level voltage also stops being applied to the input terminal D₁ of the large block DB₁, while at the same time starting to apply a high-level voltage to the input terminal D₂ of the large block DB₂ positioned second from the left in Fig. 3. As the next step, the selection signal generating circuit 19 causes high-level voltages to be applied again to the ten input terminals E₁ to E₁₀ sequentially and separately during a predetermined length of time. After termination of high-level voltage application to the input terminal E₁₀ at time t₃, the aforementioned operations are repeated for the remaining large blocks DB₃ to DB₁₁.

The potentials at the junction points B₁ to B₁₁₀ of the selector circuits 18 (see Fig. 4) rise to high level only during the time when the voltages applied to the two input terminals D, E are both high in level (see Fig. 5). More specifically, the potential at the junction point B₁ of the selector circuit 18 to the extreme left of Fig. 3, as shown in Fig. 6, assumes a high level only during the period when the voltages applied to the input terminal D₁ of the large block DB₁ and the input terminal E₁ are both at high level. On the other hand, the potential at the junction point B₂ of the right adjacent selector circuit 18 in Fig. 3 of the selector circuit 18 rises to high level only during the time when the voltages applied to the input terminal D₁ of the large block DB₁ and the input terminal E₂ are both at high level. As a consequence, the potential at the junction points B₁ to B₁₁₀ of the selector circuits 18 making up the image sensor assume a high level sequentially in separate timings. Thus, the blocking diodes 12 constituting the image sensor turn on sequentially and separately for each small block, and thereby the stored charges are read out. The lowest waveform in Fig. 6 represents the period when a given one of the blocking diodes 12 is turned on. During the high-level period of the waveform, the potential at the input terminals D₁ to D₁₁ assume a high level sequentially. In this manner, upon termination of each cycle of operations from the large blocks DB₁ through DB₁₁, an image signal is produced in predetermined sequence from all the 1760 sensors 14. Of these signals, the 32 data of the first two small blocks are dummy and therefore do not contribute to an actual image signal.

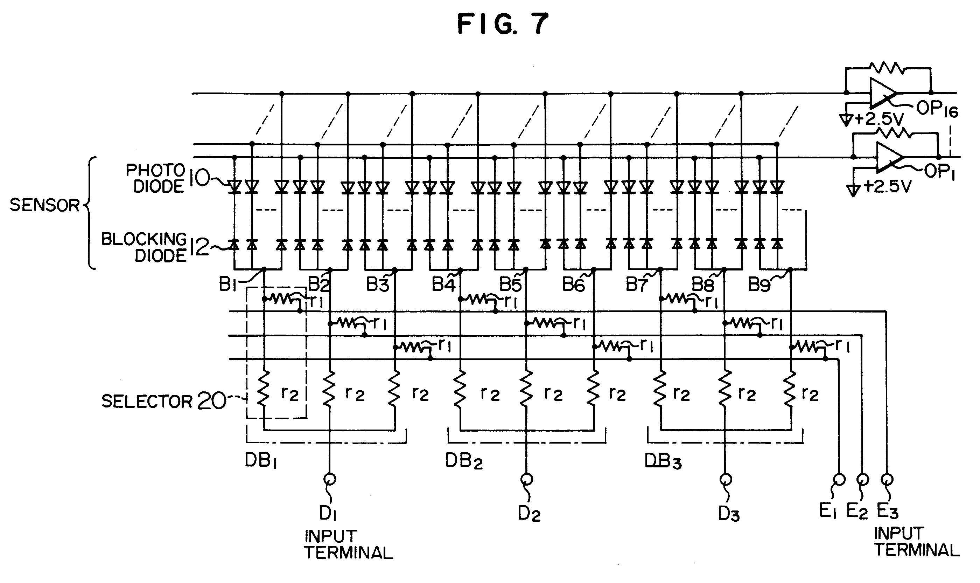

Fig. 7 is a circuit diagram showing an image sensor according to a second embodiment of the invention. For simplicity, the image sensor is assumed to comprise only three large blocks DB₁ to DB₃, each having three small blocks. The difference in number of the large and small blocks between this embodiment and other embodiments, however, is not essentially important to the invention. In the image sensor according to the present embodiment, unlike in the first embodiment shown in Fig. 3, the selector circuit 20 for each small block includes two resistors r1 and r2. The selector circuit 20, therefore, has a circuit configuration more simple than that of the selector circuit 18 shown in Fig. 3. The remaining component parts being similar to the corresponding ones of the first embodiment, those parts having the same functions as the corresponding ones in the first embodiment are designated by the same reference numerals respectively and are not described any further. The functions of the 16 operational amplifiers OP₁ to OP₁₆ will be explained later.

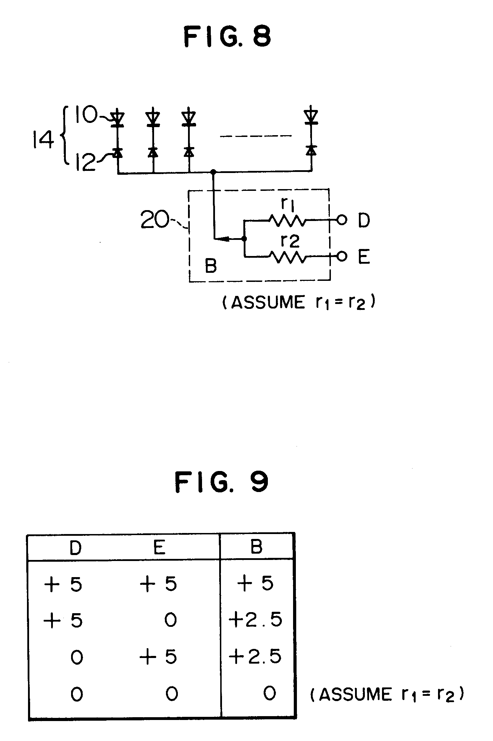

The circuit configuration of one of the selector circuits 20 in Fig. 7 is shown in the diagram of Fig. 8. This selector circuit 20 has a resistor r1 interposed between the junction point B and the input terminal D of a large block, and the other resistor r2 inserted between the junction point B and the input terminal E connected to a selection signal generating circuit (not shown). The junction point B is shared by the anodes of the 16 blocking diodes 12 in the same small block. The resistance values of two resistor r1 and r2, which can be selected at appropriate values for the circuit operation, are preferably equal to each other. In this way, the advantage results that uniform characteristics are easily obtained in forming resistors on the same circuit substratum. The image sensor according to the second embodiment will be explained with reference to the case where the resistors r1, r2 have the same value. The selector circuit 20 shown in Fig. 8, as compared with the selector circuit 18 shown in Fig. 4, has the advantages of a simple configuration and eliminating the need of a constant-voltage source. The table of Fig. 9 shows the manner in which the potential at the junction point B changes depending on the voltages applied to the two input terminals D, E in Fig. 8. As seen from this table, when the voltages applied to the input terminals D, E are both 5 volts, the potential at the junction point B stands also at 5 volts. When one of the voltages applied to the input terminals is 5 volts, by contrast, the junction point B assumes the potential of 2.5 volts. Further, when the voltages applied to the input terminals D, E are both 0 volt, the potential at the junction point B is also 0 volt. The reason why the potential at the junction point B can assume 2.5 volts is because the resistors r1, r2 are equal to each other and therefore the +5-V voltage applied to one of the two input terminals D, E is divided by one half by the two resistors r1, r2.

The potential at the junction point between the photodiode 10 and the blocking diode 12 is about 5 volts in initial stages of charge storage mode, and upon generation of charges due to photoelectric conversion, gradually decreases. The lowest potential that can be reached is approximately 3 volts considering the dynamic range of the image sensor. As a result, unless the voltage applied to the anode of the blocking diode 12 exceeds at least 3 volts, the blocking diode 12 remains off. This off state is maintained even when the voltage reaches 2.5 volts as well as when the potential at the junction point B is 0 volt. Consequently, only when the voltages applied to the two input terminals D, E both reach 5 volts, the charges of the photodiode 10 are read out, and not otherwise.

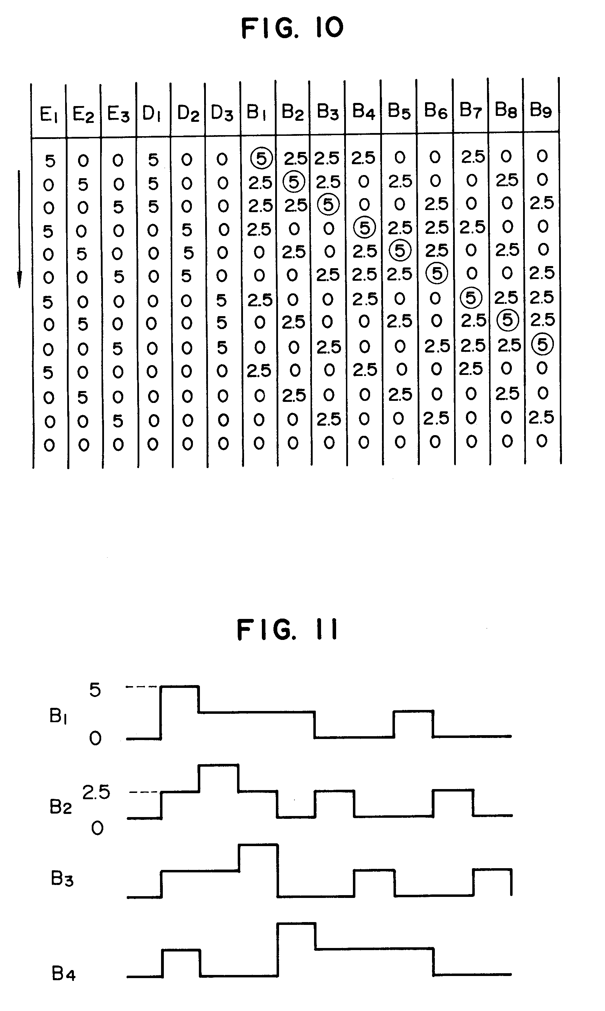

Fig. 10 is a table showing the operation of the image sensor shown in Fig. 7. Each numeral in the table designates the potential at a corresponding terminal or point. As obvious from the table, the potential at the junction point B reaches 5 volts only at a single point simultaneously in each small block. (In Fig. 10, the points attaining 5 volts are encircled.) Also, Fig. 11 is a timing chart showing the change in potential of the four junction points B₁ to B₄ shown in Fig. 7. This corresponds to the numerical change with the small blocks in Fig. 10 moved vertically downward. As seen from the foregoing explanation, a corresponding small block is turned on and the charges stored in the photodiodes are delivered only when the potentials at the junction points B₁ to B₄ in the timing chart of Fig. 11 are +5 volts.

The operational amplifiers OP₁ to OP₁₆ shown in Fig. 7 are for amplifying the current recovered from the photodiodes 10 of each small block. The input terminals of the operational amplifiers OP₁ to OP₁₆ not connected to the photodiodes are connected to a +2.5-volt constant-voltage source corresponding to one half of the drive voltage, so that the output line of the photodiodes 10 is maintained at 2.5 volts. The reason is that in the above-mentioned storage mode, the potential at the junction point B is 0 volt or 2.5 volts depending on the circumstances and therefore, an accurate operation is intended even with 2.5 volts. More specifically, when the potential at the junction point B is higher than that on the output line of the photodiodes 10 in storage mode, the charges stored in the photodiodes may erroneously be discharged when switching the voltages applied to the input terminals D and E. This inconvenience is prevented by setting the potential on the output line to 2.5 volts. As far as the potential at the junction point B remains at 0 volt, the potential on the output line is higher and therefore there is no likelihood of the photodiodes being discharged.

Apart from the above-mentioned case in which the two resistors r1, r2 have the same resistance value, assume that the two resistors r1, r2 have different values.

If a potential on the output line is maintained at the potential at the junction B with the input terminal D or E reaching +5-volts (the potential obtained by distributing +5-volts through the two resistors r1, r2), whichever is higher, then the photodiodes in charge storage mode can be prevented from being discharged as in the above-mentioned case.

In the image sensor shown in Fig. 7, as that shown in Fig. 3 according to the first embodiment, the number of the ICs required on the output side of the sensors 14 remains the same as in the prior art, while the number of the ICs required on the input side of the sensors 14 can be considerably reduced. As a consequence, the number of bondings is remarkably reduced and so is the packaging cost, as in the case of the image sensor according to the first embodiment of the invention. Also, the resistors r1, r2 have the advantage that they can be formed in a way more simple than the switching diodes 16a, 16b shown in Fig. 3.

As will be understood from the foregoing description, according to an image sensor of the present invention, both the input and output sides of sensors can be wired in matrix. As a result, the number of expensive signal-processing ICs at the output of the sensors is not increased while reducing the number of drive ICs on the input side of the sensors. Thus, there is provided an image sensor in which the number of bondings of the drive ICs on the input side of the sensors is reduced considerably, and the sensor fabrication processes are simplified with a lower packaging cost.

Further, the selector means is configured to include simple logic elements, which can be built in through the same process as the sensors. The sensor fabrication processes can thus be further simplified while at the same time reducing the packaging cost of the image sensor.

Furthermore, the erroneous operation of the selector means is prevented, thereby providing an image sensor wherein image information can be accurately read out of the sensors.

Although the invention has been described in its preferred form with a certain degree of particularity, it is understood that the present disclosure of the preferred form has been changed in the details of construction and the combination and arrangement of parts may be resorted to without departing from the spirit and the scope of the invention as hereinafter claimed.

## Claims

1. An image sensor comprising a plurality of sensors (14) each including a photoelectric converter (10) and a switching device (12) and an output circuit (30) having a plurality of channels (C₁ to C₁₆) for producing image information from each of said sensors (14):
wherein said sensors (14) are divided into a plurality of small blocks each including sensors (14) in the same number as the channels (C₁ to C₁₄);
the outputs of the photoelectric converters (10) are connected in matrix with each small block as a unit;
the sensors (14) in each small block are driven simultaneously to produce parallel signals for each of the small blocks, thereby reading image information stored in each of said sensors (14); and
said small blocks are divided into a plurality of large blocks (DB₁ to DB₁₁) each having the same number of small blocks;
said image sensor further comprising means (18, 20) for selecting which small block is to be driven in each of said large blocks (DB₁ to DB₁₁) and means (40₁ to 40₁₁) for sending out a signal to each of said large blocks (DB₁ to DB₁₁) for driving the sensors and producing image information.

2. An image sensor according to Claim 1, wherein said selector means (18) includes a circuit having a pull-up resistor (R) and at least two semiconductor devices (16a, 16b) for each small block.

3. An image sensor according to Claim 1, wherein said selector means includes a circuit having two resistors for each small block.

4. An image sensor according to Claim 3, wherein said selector means (20) includes a circuit having two resistors (r1, r2) of the same value for each of said small blocks.

5. An image sensor according to Claim 4, wherein the output of said photoelectric converter (10) is maintained at a voltage one half of a drive voltage for said switching device (12).
